# DEMANDE DE BREVET EUROPEEN

(11) **EP 1 850 446 A1**
(43) Date de publication de la demande: **31.10.2007**
(21) Numéro de dépôt: 07290490.7
(22) Date de dépôt: 20.04.2007
(51) Int. Cl.: H02J 7/00

(54) **Procédé de charge de batterie avec compensation de resistance interne, chargeur et batterie pour la mise en oeuvre de ce procédé**

(30) Priorité: 26.04.2006 FR 0603710
(71) Demandeur: SAGEM DEFENSE SECURITE SA, 75015 Paris (FR)
(72) Inventeur: Nollet, Michael, 78590 Noisy Le Roi (FR)
(74) Mandataire: Lavialle, Bruno François Stéphane

(57) **Abrégé**

La présente invention concerne un procédé de charge d'une batterie (4) ayant une résistance interne (1), comprenant l'étape d'alimenter la batterie avec un courant de charge (I) sensiblement constant et une tension de charge (u) régulée en compensant au moins en partie une chute de tension engendrée par la résistance interne de la batterie.

L'invention a également pour objet un chargeur et une batterie pour la mise en oeuvre de ce procédé.

## Description

La présente invention concerne un procédé de charge d'une batterie et plus particulièrement d'une batterie lithium-ion (Li-Io) utilisable pour l'alimentation d'un appareil électrique.

L'invention a également pour objet un chargeur et une batterie permettant la mise en oeuvre de ce procédé.

### ARRIERE PLAN DE L'INVENTION

La charge d'une batterie lithium-ion débute par une phase de charge à courant constant qui se poursuit par une phase de charge à tension constante dès que la somme de la force contre-électromotrice de la batterie et de la chute de tension provoquée par la résistance interne de la batterie est égale à la tension de sortie du chargeur. Comme il est actuellement préconisé de charger la batterie à une tension maximale de 4,2 volts par élément d'accumulation présent dans la batterie, la tension de sortie du chargeur est réglée sur cette valeur.

Par temps froid, la résistance interne de la batterie est très importante de sorte que la phase de charge à courant constant est réduite. Or, comme la phase de charge à courant constant est la phase de charge la plus efficace, la charge de la batterie est d'autant plus longue que cette phase est réduite.

### OBJET DE L'INVENTION

Il serait donc intéressant de disposer d'un moyen permettant d'améliorer la charge des batteries en particulier lorsque celles-ci ont une résistance interne importante.

### RESUME DE L'INVENTION

A cet effet, on prévoit, selon l'invention, un procédé de charge d'une batterie ayant une résistance interne, comprenant l'étape d'alimenter la batterie avec un courant de charge sensiblement constant et une tension de charge régulée en compensant au moins en partie une chute de tension engendrée par la résistance interne de la batterie.

Ainsi, la tension fournie à la batterie est égale à la tension de charge maximale acceptable en fonction du courant de charge fourni, augmentée de la chute de tension due à la résistance interne. Ceci permet d'augmenter la durée de la phase de charge à courant constant et d'accélérer le processus de charge.

L'invention a également pour objet un chargeur et une batterie pour la mise en oeuvre de ce procédé.

Le chargeur selon l'invention comprend un circuit de charge à régulation de tension et un circuit de compensation associé au circuit de charge et agencé pour compenser au moins en partie une chute de tension engendrée par la résistance interne de la batterie.

La batterie selon l'invention comporte un circuit de compensation pourvu de moyens de sa liaison à un chargeur et agencé pour commander celui-ci de telle manière que le chargeur fournisse une tension compensant une chute de tension provoquée par la résistance interne de la batterie.

D'autres caractéristiques et avantages de l'invention ressortiront à la lecture de la description qui suit de modes de mise en oeuvre particuliers non limitatifs de l'invention.

### BREVE DESCRIPTION DES DESSINS

Il sera fait référence aux dessins annexés, parmi lesquels :
- la figue 1 est une vue schématique d'un chargeur conforme à l'invention,
- la figure 2 est une vue schématique partielle de ce chargeur,
- la figure 3 est une vue analogue à celle de la figure 1 d'une batterie conforme à l'invention,
- la figure 4 est une vue schématique d'un chargeur selon une variante de réalisation de l'invention.

### DESCRIPTION DETAILLEE DE L'INVENTION

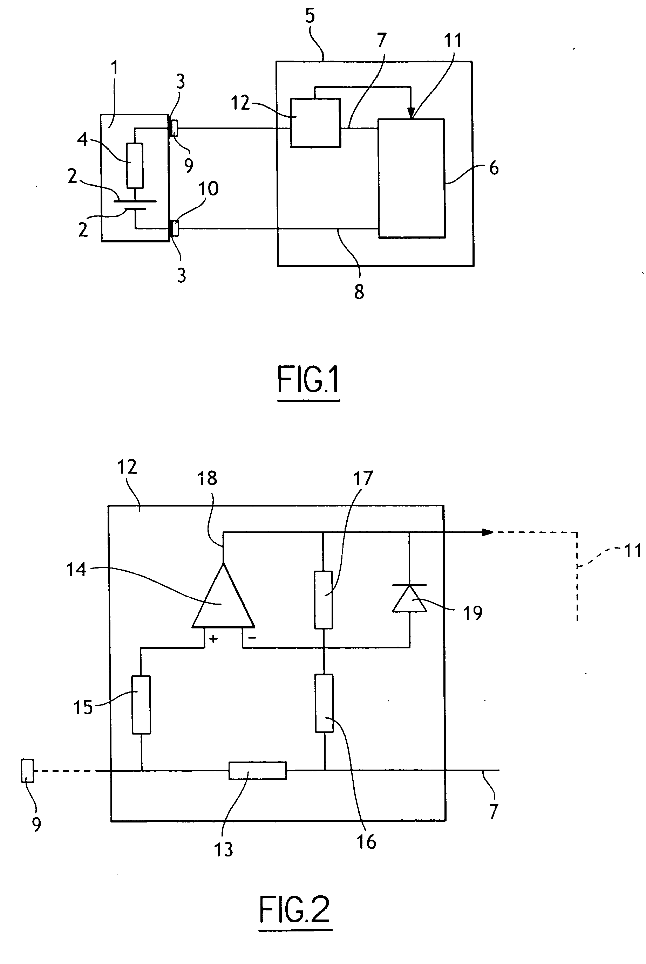

Le chargeur représenté aux figures 1 et 2 est destiné à charger des batteries généralement désignées en 1 qui comporte des éléments d'accumulation électrique comportant chacun des électrodes 2 séparées par un électrolyte et reliées à des bornes 3 de connexion externe de la batterie 1. Les éléments d'accumulation peuvent être reliés en série ou en parallèle aux bornes 3. La batterie 1 représentée ne comporte qu'un seul élément d'accumulation afin de simplifier l'explication de l'invention. La batterie 1 a, par construction, une résistance interne, symbolisée en 4, ayant une valeur décomposable en une partie fixe et une partie variable en fonction de la température (la résistance interne résulte notamment de la difficulté de circulation des charges dans l'électrolyte). La valeur de la résistance interne s'accroît lorsque la température baisse.

Le chargeur conforme à l'invention, généralement désigné en 5, comprend un circuit de charge 6 à tension et courant régulés ayant des sorties positive et négative 7, 8 reliées à des bornes positive et négative 9, 10 de raccordement aux bornes 3 de la batterie 1. Le circuit de charge 6 est connu en lui-même et est assimilable à une alimentation linéaire ou à découpage. Le circuit de charge 6 comprend une entrée d'asservissement 11 de la tension délivrée.

Entre la sortie positive 7 du circuit de charge 6 et la borne positive de raccordement 9, est interposé un circuit de compensation 12. Le circuit de compensation 12 comprend ici une résistance de référence 13 montée en série avec la borne positive 7 et la borne positive de raccordement 9. Le circuit de compensation 12 comprend un amplificateur 14 dont l'entrée positive est reliée par une résistance 15 à la borne positive de raccordement 9 et à la résistance de référence 13 et l'entrée négative est reliée par une résistance 16 à la résistance de référence 13 et à la sortie positive 7 du circuit de charge 6. Une résistance 17, en série avec la résistance 16 et de même valeur que la résistance 16, est reliée à l'entrée négative de l'amplificateur 14 et à la sortie 18 de celui-ci pour former un diviseur de tension avec la résistance 16. Une diode 19 est reliée à l'entrée négative de l'amplificateur 14 et à la sortie 18 de celui-ci en parallèle de la résistance 17. La sortie 18 de l'amplificateur 14 est en outre reliée à l'entrée d'asservissement 11 du circuit de charge 6.

La résistance 15 a une valeur de moitié inférieure à celle de la résistance 16.

La résistance de référence 13 a une valeur R égale à la partie fixe de la valeur de la résistance interne de la batterie 1.

Conformément à l'invention, le procédé de charge de la batterie 1 comprend l'étape d'alimenter la batterie avec un courant de charge sensiblement constant et une tension de charge U régulée en compensant au moins en partie la chute de tension engendrée par la résistance interne de la batterie 1.

Le courant de charge lors de la phase à courant constant est ici I et la tension nominale de charge u va croître régulièrement au fur et à mesure de l'élévation du niveau de charge jusqu'à atteindre 4,2 volts multipliés par le nombre d'éléments d'accumulation de la batterie 1 (soit u = 4,2 V puisque la batterie 1 ne comporte qu'un élément d'accumulation).

On comprend que grâce au montage de compensation le circuit de charge 6 délivre une tension U égale à la tension nominale de charge u augmentée du produit de la valeur du courant de charge I et de deux fois la valeur de la résistance de référence R (soit U = u + 2RI). Ainsi, aux bornes de la batterie 3, la tension est égale à la tension nominale de charge u augmentée du produit de la valeur du courant de charge I et de la valeur de la résistance de référence R (soit u + RI, la résistance de référence 13 entraînant elle-même une chute de tension de RI). On a ainsi compensé une partie de la chute de tension qu'engendre la résistance interne de la batterie 1 lors de la charge.

La diode 19 est une diode Schottky destinée à limiter la compensation à 0,3 volts pour empêcher que la tension de charge dépasse 4,5 volts, ce qui risquerait d'entraîner une dégradation de la batterie 1. Il est nécessaire de prévoir une diode 19 par élément d'accumulation.

Lorsque la force contre-électromotrice de la batterie 1 est égale à la tension nominale de charge u, il est procédé à une phase de charge à tension sensiblement constante durant laquelle le courant de charge I va tendre progressivement vers 0 tandis que la tension de charge U va tendre vers la tension nominale de charge u.

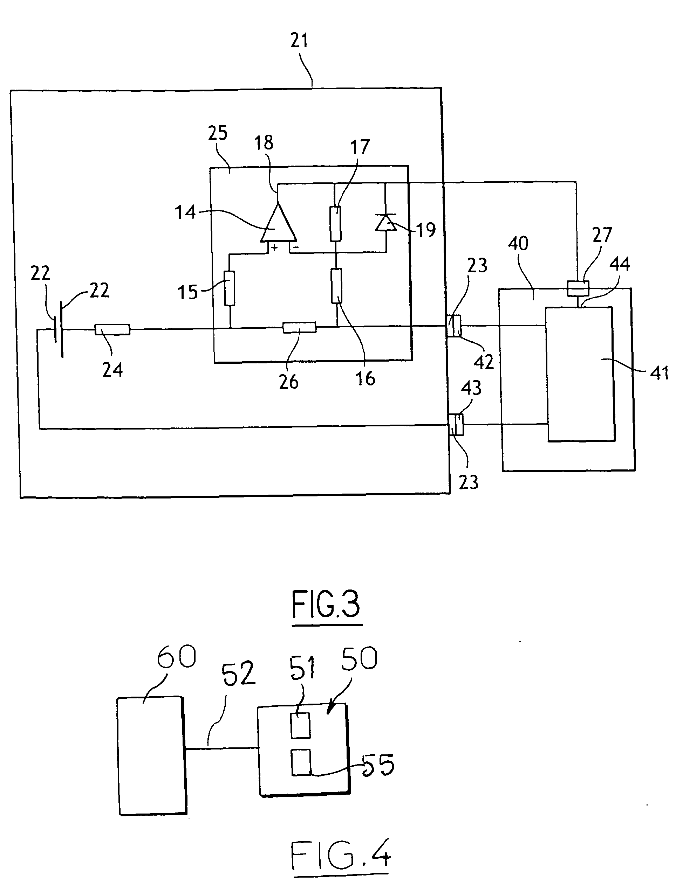

La figure 3 représente un autre mode de mise en oeuvre du procédé de l'invention.

La batterie 21 comprend comme précédemment un élément d'accumulation électrique comportant deux électrodes 22 séparées par un électrolyte et reliées à des bornes 23 de la batterie 21. La batterie 21 comprend en outre un circuit de compensation généralement désigné en 25 comprenant une résistance de référence, des résistances 15, 16, 17, un amplificateur 14 de sortie 18 et une diode 19. Le circuit de compensation 25 a une structure identique au circuit de compensation 12 de la figure 2 sauf en ce qui concerne la résistance de référence désignée ici en 26 qui a une structure différente de celle de la résistance de référence 13 comme cela sera expliqué par la suite.

Le chargeur utilisé, référencé 40, comprend ici un circuit de charge 41 à tension et courant régulés, relié à des bornes positive et négative 42, 43 de raccordement aux bornes 23 de la batterie 21. Le circuit de charge 40 comprend une entrée d'asservissement 44 de la tension et est similaire à celui du mode de réalisation de la figure 1.

La résistance de référence 26 du circuit de compensation 25 est montée en série avec, d'une part, la borne 3 reliée à la borne positive 42 de raccordement du chargeur 40 et, d'autre part, avec l'élément d'accumulation (la résistance de référence 26 est donc en série avec la résistance interne 24). Dans ce circuit de compensation 25, alors que la résistance de référence 13 était une résistance fixe dans le mode de réalisation précédent, la résistance de référence 26 est une résistance à fort coefficient de température, qui est donc variable en fonction de la température. La résistance de référence 26 est placée au plus près des électrodes 22 et de l'électrolyte pour être soumis à la température de ceux-ci. Il est possible d'associer à cette résistance un amplificateur analogique pour ajuster la variation de la valeur de la résistance en fonction de la température.

La sortie 18 de l'amplificateur 14 est reliée à un connecteur de raccordement 27 relié à l'entrée d'asservissement 44.

Le procédé de charge est identique à celui précédemment décrit.

A la figure 4 sont schématisés un chargeur 50 avec un circuit de charge 51 et un circuit de compensation 55 et une batterie 60 de type SMART reliée au chargeur 50 (liaison symbolisée en 52) et agencée pour fournir au chargeur 50 des informations relatives à l'état de la batterie et notamment une information de température. La température est détectée par un détecteur de température comme une thermistance qui est logée au coeur de la batterie et qui transmet au processeur de la batterie un signal électrique représentatif de l'information de température. Le processeur de la batterie extrait du signal l'information de température et la communique sous forme numérique au chargeur, par exemple par une liaison de type SM Bus. Le signal issu de la thermistance est aussi transmis au chargeur directement, sous forme analogique, par une liaison dédiée. Le circuit de compensation 55 utilise la température pour compenser, en fonction de la température, au moins en partie la chute de tension résultant de la résistance interne de la batterie.

Le circuit de compensation 55 peut être réalisé de manière logique ou numérique (programme exécuté par un processeur du chargeur) et / ou analogique (par exemple de façon analogue à ce qui a été précédemment décrit). Pour le premier mode, on utilise la liaison SM Bus et, pour le deuxième mode, la liaison dédiée à la thermistance. Le mode de réalisation logique et le mode de réalisation analogique peuvent être combinés dans le même chargeur.

Bien entendu, l'invention n'est pas limitée au mode de réalisation décrit et on peut y apporter des variantes de réalisation sans sortir du cadre de l'invention tel que défini par les revendications.

Il est possible de remplacer la résistance de référence fixe du circuit de compensation des figures 1 et 2 par une résistance variable en fonction de la température, ou en fonction de tout autre paramètre dont la variation peut être rapprochée de celle de la température. On pourra par exemple utiliser un transistor JFET dont la grille serait alimentée à une tension que l'on ferait varier en fonction de la température.

La température de la batterie peut être déterminée au moyen de thermostats, thermistances, thermocouples, tensions de diodes ... .

Il est également possible de faire mesurer la résistance interne de la batterie par le chargeur lors de la charge en envoyant une variation de courant connue et en observant la variation de tension correspondante. Il est également possible d'effectuer une mesure de tension à vide et une mesure de tension sous un courant prédéterminé.

Bien que dans le mode de réalisation décrit, le circuit de compensation soit analogique, le circuit de compensation peut être réalisé sous forme numérique. Dans le cas d'une batterie de type SMART intégrant un processeur, il est possible d'obtenir du processeur un certain nombre d'informations concernant la batterie. On pourrait ainsi prévoir que ce processeur fournisse un signal représentatif de la température interne de la batterie ou un signal directement représentatif de la valeur de la résistance interne de la batterie, signal qui peut être exploité par le chargeur pour déterminer la tension de charge à fournir pour compenser la résistance interne de la batterie.

Avantageusement, le circuit de compensation sera agencé pour compenser également les pertes de tension qu'occasionnent les connecteurs et éventuellement des composants internes à la batterie.

Le circuit de compensation peut être logé dans le chargeur ou dans la batterie.

## Revendications

1. Procédé de charge d'une batterie (1) ayant une résistance interne (4), comprenant l'étape d'alimenter la batterie avec un courant de charge (I) sensiblement constant et une tension de charge (u) régulée en compensant au moins en partie une chute de tension engendrée par la résistance interne de la batterie.

2. Procédé selon la revendication 1, comprenant l'étape de détecter une variation de la résistance interne (R) et l'étape d'adapter la compensation à la variation détectée.

3. Procédé selon la revendication 2, comprenant l'étape d'acquérir une température de la batterie (1) et d'adapter la compensation en fonction de la température.

4. Procédé selon la revendication 2, comprenant l'étape de mesurer la résistance interne (R) de la batterie (1) et d'adapter la compensation à la résistance interne mesurée.

5. Procédé selon la revendication 1, la résistance interne ayant une valeur décomposable en une partie fixe et une partie variable, le procédé comprenant l'étape de compenser la chute de tension correspondant à la partie fixe de la valeur de la résistance interne.

6. Chargeur pour batterie (1) ayant une résistance interne, comprenant un circuit de charge (6) à régulation de tension et un circuit de compensation (12) associé au circuit de charge et agencé pour compenser au moins en partie une chute de tension engendrée par la résistance interne de la batterie.

7. Chargeur selon la revendication 6, dans lequel le circuit de compensation (12) comprend une résistance de référence (13) reliée en série au circuit de charge et à la résistance interne (4) de la batterie (1) et de valeur (R) inférieure ou égale à la résistance interne de la batterie, le circuit de compensation étant relié à une entrée d'asservissement en tension (11) du circuit de charge pour que le circuit de charge délivre une tension (11) égale à la somme d'une tension de charge nominale (u) de la batterie et du produit d'un courant de charge (I)correspondant et de deux fois la valeur de la résistance de référence.

8. Chargeur selon la revendication 6, dans lequel le chargeur (50) est agencé pour recevoir au moins une information de température de la batterie (60) et le circuit de compensation (55) est agencé pour compenser au moins en partie la chute de tension en fonction de la température.

9. Chargeur selon la revendication 8, dans lequel le chargeur (50) est agencé pour recevoir des informations des batteries (60) de type SMART.

10. Batterie (21) ayant une résistance interne, comportant un circuit de compensation (25) pourvu de moyens (23, 27) de sa liaison à un chargeur (40) et agencé pour commander celui-ci de telle manière que le chargeur (40) fournisse une tension compensant une chute de tension provoquée par la résistance interne de la batterie.
